# FASCICULE DE BREVET EUROPEEN

(11) **EP 3 610 175 B1**
(45) Date de publication et mention de la délivrance du brevet: **26.05.2021**
(21) Numéro de dépôt: 18714588.3
(22) Date de dépôt: 19.03.2018
(51) Int. Cl.: F16H 57/04

(54) **LUBRIFICATION POUR TRAIN D'ENGRENAGES ÉPICYCLOÏDAL**
SCHMIERUNG FÜR EINEN PLANETENRADSATZ
LUBRICATION FOR A PLANETARY GEARSET

(30) Priorité: 14.04.2017 FR 1753294
(43) Date de publication de la demande: 19.02.2020
(73) Titulaire: Safran Aircraft Engines, 75015 Paris (FR)
(72) Inventeur: MORREALE, Serge, René, 77550 Moissy-Cramayel (FR)
(74) Mandataire: Ernest Gutmann - Yves Plasseraud S.A.S.
(86) Numéro de dépôt international: PCT/FR2018/050657
(87) Numéro de publication internationale: WO 2018/189442

(56) Documents cités:
- WO-A1-2013/124590
- FR-A1- 2 987 416
- FR-A1- 3 041 054

## Description

Le domaine de la présente invention est celui des turbomachines et plus particulièrement des trains d'engrenages épicycloïdaux et parmi les trains épicycloïdaux plus spécifiquement les réducteurs épicycloïdaux et les transmissions différentielles.

De façon classique, un réducteur à train d'engrenages épicycloïdal comprend un pignon planétaire ou pignon central, une couronne planétaire ou couronne extérieure et des pignons satellites qui sont en prise avec le pignon planétaire et avec la couronne, le support de l'un de ces trois composants devant être bloqué en rotation pour le fonctionnement du train d'engrenages. Lorsque le porte-satellites est fixe en rotation, le pignon central et la couronne sont menants et menés, respectivement, ou inversement. La lubrification et le refroidissement des engrènements et des axes des pignons satellites ne posent alors aucun problème et sont assurés par des gicleurs qui sont fixes en rotation et qui peuvent projeter de l'huile en permanence sur les zones d'engrènement des pignons satellites avec le pignon central et avec la couronne et sur les axes des pignons satellites.

Toutefois, dans le cas le plus fréquent, la couronne extérieure est fixe en rotation et le pignon central et le porte-satellites sont menant et mené, respectivement. Ce type de montage est préféré dans les cas où un rapport de réduction supérieur à trois est souhaité puisqu'il s'avère moins encombrant. La lubrification des zones d'engrènement et des axes des pignons satellites pose alors un problème qui est résolu dans la technique actuelle par des réseaux complexes de conduits de cheminement d'huile sous pression, utilisant des joints dynamiques ou joints tournants qui sont soumis à une usure et qu'il faut vérifier et changer régulièrement.

Pour éviter l'utilisation de joints tournants, la déposante a proposé dans sa demande WOA12010092263 un dispositif de lubrification dans lequel un injecteur fixe fait gicler de l'huile dans une coupelle annulaire solidaire d'un porte-satellites, l'huile étant ainsi récupérée par centrifugation et dirigée par la suite vers des moyens de lubrification des pignons.

Ce dispositif améliore fortement la fiabilité du système de lubrification du réducteur ainsi que sa maintenance. Cependant ce dispositif induit une dépendance de la pression d'alimentation des moyens de lubrification des pignons du porte-satellites à la compression qu'il est possible de créer entre la coupelle annulaire et les moyens de lubrification, car l'alimentation d'huile par projection provoque une rupture de pression dans le circuit de lubrification. De manière connue, les moyens d'alimentation en huile sont configurés pour fournir un débit d'huile proportionnel à la vitesse de rotation d'un arbre de la turbomachine, par exemple l'arbre du compresseur haute pression qui n'entraine pas le pignon central du train d'engrenages. Ainsi, à haute vitesse de rotation, le débit d'huile est important et peut être envoyé par centrifugation jusqu'aux dentures et axes du porte-satellites. Toutefois, à faible vitesse, le débit d'huile qui est alors plus faible ne peut pas être convenablement centrifugé par la coupelle du fait de sa faible vitesse de rotation. Ainsi, il s'ensuit que l'alimentation en huile est insuffisante lors des phases de ralenti, ce qui peut conduire à endommager les dentures des satellites, de la couronne externe et du pignon central par défaut de lubrification et de refroidissement. Le défaut d'alimentation d'huile s'avère plus critique pour les dentures des satellites, de la couronne externe et du pignon central que pour les axes des satellites puisque les sorties des conduits d'alimentation en huile des dentures des satellites, de la couronne externe et du pignon central sont placées à un rayon inférieur aux sorties des conduits d'alimentation en huile des axes des satellites, ce qui conduit à une pression d'alimentation plus faible. Enfin, l'insuffisance de centrifugation d'huile à bas régime peut conduire à une accumulation d'huile dans la coupelle annulaire induisant un débordement d'huile de la coupelle dans l'enceinte qui la loge.

De même, dans une autre configuration connue, le gicleur peut être porté par l'arbre portant le pignon central de sorte à avoir son jet d'huile orienté en direction de la coupelle. Ce montage souffre des mêmes difficultés que mentionnées avec un montage à gicleur fixe

Le document WO 2013/124590 A1 décrit un dispositif avec les caractéristiques du préambule de la revendication 1.

L'invention a notamment pour but d'apporter une solution simple, efficace et économique aux problèmes de l'art antérieur décrit précédemment.

A cet effet, elle propose un train d'engrenages épicycloïdal comprenant un pignon central, une couronne extérieure et des pignons satellites en prise avec le pignon central et avec la couronne extérieure et montés chacun libre en rotation sur un porte-satellites, le train d'engrenages comprenant des moyens de lubrification des dentures et des axes des pignons satellites, ces moyens comportant une coupelle annulaire solidaire du porte-satellites ouverte radialement vers l'intérieur, caractérisé en ce qu'une écope annulaire est agencée radialement à l'intérieur de la coupelle et appliquée annulairement à étanchéité sur celle-ci, l'écope annulaire étant solidaire en rotation du pignon central.

L'intégration d'une écope annulaire solidaire du pignon central permet de centrifuger l'huile récupérée par l'écope annulaire à une vitesse supérieure à celle du porte-satellites, ce qui permet d'augmenter la pression d'huile d'alimentation de la coupelle par rapport à la technique antérieure et assure ainsi une meilleure alimentation en huile des dentures et des axes des satellites en fonctionnement à faible vitesse de rotation du porte-satellites.

Selon une autre caractéristique de l'invention, l'écope annulaire comprend deux flancs annulaires reliés radialement vers l'extérieur par une paroi radialement externe de fond comportant des orifices de passage d'huile vers la coupelle. Par ailleurs, les flancs peuvent converger l'un vers l'autre en direction de la paroi de fond.

La coupelle peut comprendre deux parois annulaires radiales dont les extrémités radialement internes sont en appui sur des joints annulaires montés dans des gorges annulaires de l'écope annulaire.

Les joints annulaires sont, par exemple, des joints annulaires fendus montés précontraints circonférentiellement dans les gorges annulaires. Ces joints annulaires sont appelés usuellement des segments. Ce montage par compression circonférentielle des joints dans les gorges permet de les rendre solidaires en rotation de la coupelle.

Lorsque le pignon central est entrainé en rotation par l'arbre d'un compresseur basse pression, il est possible de distinguer deux situations, une première correspondant à une faible vitesse de rotation de l'arbre du compresseur basse pression et une seconde correspondant à une haute vitesse de rotation de l'arbre du compresseur basse pression.

Dans la première situation, la faible vitesse de rotation de l'arbre induit une faible rotation du porte-satellite de sorte que l'huile s'accumule dans la coupelle annulaire et dans l'écope annulaire, ce qui induit une pressurisation des joints sur les flancs des gorges annulaires de l'écope annulaire. Dans la seconde situation, la vitesse de rotation élevée de l'arbre du compresseur induit une rotation importante du porte-satellite, l'huile ne s'accumulant plus dans l'écope annulaire, et évitant de pressuriser les joints sur les flancs des gorges de l'écope annulaire. Ainsi, l'étanchéité prévue avec le montage selon l'invention permet de limiter l'usure des joints aux seules phases de faible vitesse de rotation correspondant à des phases de ralenti, ce qui n'est pas le cas de la technique antérieure dans laquelle les joints sont soumis à des usures permanentes.

L'écope annulaire peut comprendre une pluralité de cloisons axiales espacées circonférentiellement les unes des autres et délimitant une pluralité de cavités circonférentielles indépendantes. Cela permet d'augmenter la tenue mécanique de l'écope en fonctionnement. Par ailleurs, ces cloisons permettent également un meilleur entraînement en rotation de l'huile.

L'écope peut encore comprendre une pluralité de couples d'ailettes espacées circonférentiellement, les ailettes d'un couple donné s'étendant en vis-à-vis axiale l'une vers l'autre depuis un flanc de l'écope annulaire. Dans cette réalisation, l'étendue axiale des ailettes est limitée et elles ne se touchent pas de sorte que les projections d'huile à l'extérieur de l'écope sont réduites par rapport à la réalisation avec cloisons.

L'invention concerne également une turbomachine comprenant un réducteur à train d'engrenages dont le pignon central entoure et est solidaire en rotation d'un arbre de la turbomachine, et des premiers moyens fixes de projection d'huile agencés radialement à l'extérieur de l'arbre et comportant au moins un gicleur d'huile projetant de l'huile en direction de l'arbre dans l'espace annulaire entre l'écope annulaire et l'arbre.

La projection d'huile est effectuée directement sur l'arbre, puis s'écoule dans l'écope et ensuite dans la coupelle pour alimenter les dentures et les axes des pignons satellites.

Dans une configuration particulière de l'invention, l'arbre porte une paroi annulaire de déviation de l'huile formée en saillie radialement vers l'extérieur sur l'arbre et positionnée axialement en vis-à-vis de l'écope annulaire, le gicleur d'huile étant orienté de manière à projeter de l'huile en direction de ladite paroi de déviation.

Lorsque le réducteur à train d'engrenages est monté dans une turbomachine, il est agencé dans une enceinte annulaire formée radialement à l'intérieur d'un compresseur basse pression, le porte-satellites étant relié à une roue de soufflante amont et l'arbre étant un arbre du compresseur basse pression.

Préférentiellement, le réducteur à train d'engrenages est intercalé axialement entre un palier amont et un palier aval portés par une structure statorique du compresseur basse pression, le palier amont guidant en rotation un arbre de liaison de la roue de soufflante au porte-satellites et le palier aval guidant en rotation l'arbre du compresseur basse pression.

Selon une autre caractéristique de l'invention, les premiers moyens fixes de projection d'huile sont intégrés à un circuit d'huile comprenant en outre des seconds moyens de projection d'huile sur le palier amont et le palier aval et une pompe d'alimentation simultanée des premiers et seconds moyens de projection d'huile.

L'invention est, par exemple, applicable à un train d'engrenage, tel qu'un train d'engrenage dans lequel la couronne extérieure est fixe. Dans ce cas, le train d'engrenages peut être qualifié de réducteur puisque la vitesse de sortie, c'est-à-dire celle du porte-satellites est plus faible que la vitesse d'entrée, c'est-à-dire celle de l'arbre d'entrainement en rotation du pignon central. L'invention concerne également un train d'engrenage à transmission différentielle, dans lequel le porte-satellite et la couronne extérieure sont mobiles en rotation dans des sens opposés, le porte-satellites entrainant en rotation préférentiellement une première roue de soufflante amont et la couronne extérieure entrainant préférentiellement une seconde roue de soufflante aval. Avec un tel agencement, on obtient un montage à double soufflantes contrarotatives.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1A est une demi-vue schématique en coupe axiale d'un réducteur à train d'engrenages épicycloïdal dans une turbomachine selon l'invention ;
- la figure 1B est une vue schématique en perspective tronquée du réducteur à train d'engrenages et des moyens de lubrification des satellites ;
- les figures 2 à 5 sont des vues schématiques de différents modes de réalisation d'une écope annulaire intégrée à un réducteur à train d'engrenages selon l'invention.

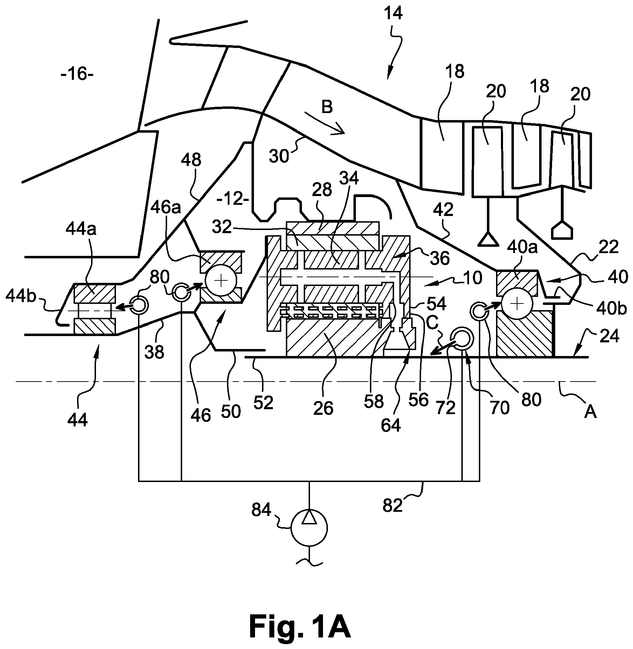

On se réfère tout d'abord à la figure 1A qui représente schématiquement un réducteur 10, selon l'invention, à train d'engrenages épicycloïdal monté dans une turbomachine telle qu'un turboréacteur d'avion. Plus précisément, le train d'engrenages 10 est monté dans une enceinte annulaire 12 formée radialement à l'intérieur d'un compresseur basse pression 14 qui est agencé en aval d'une roue de soufflante 16 et en amont d'un compresseur haute pression (non représenté). Le compresseur basse pression 14 comprend une pluralité de rangées d'aubes fixes 18 et de rangées annulaires d'aubes mobiles 20 disposées axialement, le long de l'axe A, en alternance. Les rangées d'aubes mobiles 20 sont reliées par une paroi annulaire 22 à un arbre 24 basse pression entrainant également en rotation les aubes d'une turbine basse pression aval (non représentée).

Le réducteur à train d'engrenages 10 comprend un pignon central 26 ou pignon planétaire entourant l'extrémité amont de l'arbre 24 du compresseur basse pression et solidaire de celui-ci, une couronne externe 28 ou couronne planétaire entourant le pignon central 26 et reliée fixement à une paroi annulaire 30 définissant intérieurement la veine annulaire d'écoulement du flux d'air primaire (flèche B) circulant dans le compresseur basse pression 14. Le réducteur 10 comprend encore des pignons satellites 32 qui sont en prise par leurs dentures avec des dentures du pignon central 26 et de la couronne externe 28. Ces pignons satellites 32 sont montés libres en rotation sur des axes 34 d'un porte-satellites 36 dont l'extrémité amont est reliée par un arbre de liaison 38 à la roue de soufflante 16.

L'arbre 24 du compresseur basse-pression 14 est porté et guidé en rotation par un palier aval 40 à roulement à billes dont la bague externe 40a est solidaire d'une première partie statorique 42 du compresseur basse pression 14 reliée extérieurement à la paroi annulaire interne 30 de la veine d'air primaire. L'arbre de liaison 38 est porté et guidé en rotation par deux paliers 44, 46 agencés en amont du réducteur 10 dont un premier palier 44 qui est agencé en amont d'un second palier 46 est un palier à roulement à rouleaux, le second palier 46 étant un palier à roulement à billes. Les bagues externes 44a, 46a des premier et second paliers de roulement sont portées par une seconde partie statorique 48 du compresseur basse pression reliée extérieurement à la paroi annulaire interne 30 de la veine d'air primaire.

L'enceinte annulaire 12 de logement du réducteur 10 à train d'engrenages épicycloïdal est ainsi délimitée radialement vers l'intérieur par l'arbre 24 du compresseur basse pression 14, radialement vers l'extérieur par les première 42 et seconde 48 parties statoriques et la paroi annulaire interne 30 de la veine d'air primaire, à l'amont par le premier palier amont 44 et à l'aval par le palier aval 40. On note que l'arbre de liaison 38 comprend également une paroi annulaire 50 coopérant à étanchéité avec l'extrémité amont 52 de l'arbre 24 du compresseur basse pression 14 pour éviter les fuites d'huile de lubrification à cet endroit. De même, pour limiter les fuites d'huile, la bague externe 44a du premier palier 44 amont et la bague externe 40a du palier aval 40 comprennent chacune une portion annulaire 44b, 40b coopérant à étanchéité avec l'arbre de liaison 38 et l'arbre 24 du compresseur basse pression 10, respectivement.

La rotation des pignons satellites 32 dans les axes 34 du porte-satellites s'effectue par l'intermédiaire de paliers lisses.

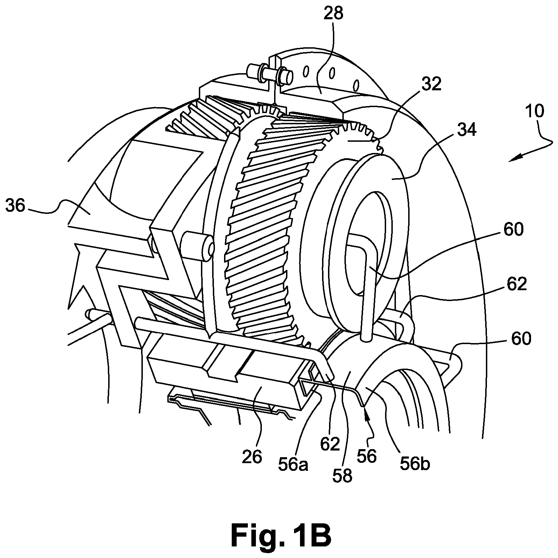

Le réducteur 10 à train d'engrenages épicycloïdal comprend des moyens de lubrification par projection d'huile sur les dentures des pignons satellites 32 et leurs axes 34, ces moyens comprenant essentiellement un rouet 54 de réception de l'huile comportant une coupelle annulaire 56, plus particulièrement de forme circulaire. La coupelle 56 présente ici une section en U dont l'ouverture est orientée radialement vers l'intérieur, c'est-à-dire en direction de l'axe de rotation A. La coupelle 56 du rouet 54 comprend une paroi de fond 58 comportant des orifices dont certains sont reliés à des conduits d'alimentation 60 en huile des axes 34 des pignons satellites 32 et dont d'autres sont reliés à des conduits d'alimentation 62 en huile des zones de contact entre les dentures des pignons satellites 32 et la denture du pignon central 26 (figure 1 B).

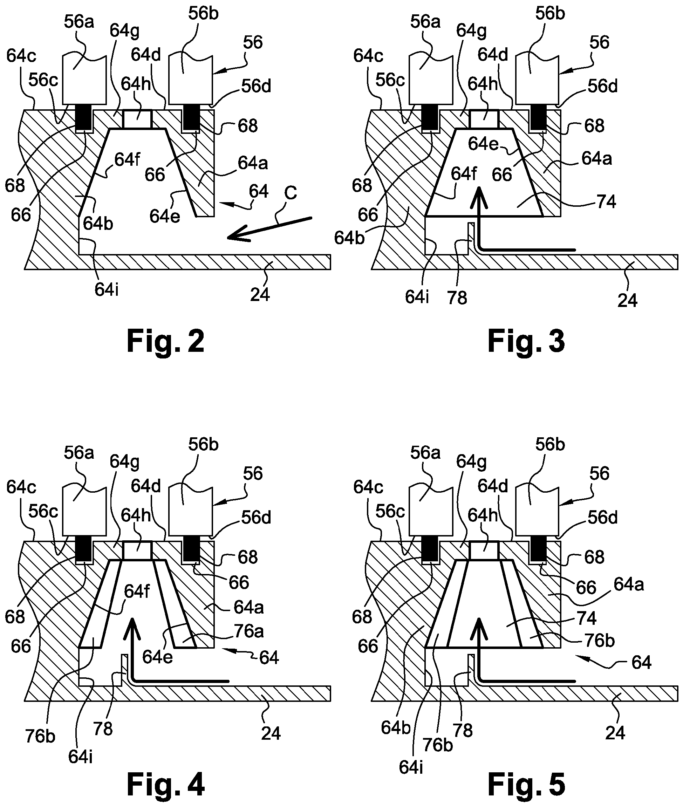

Selon l'invention, une écope annulaire 64 de récupération d'huile est appliquée annulairement à étanchéité sur la périphérie radialement interne de la coupelle 56 (l'écope annulaire n'est pas représentée sur la figure 1B). Plus précisément et en référence aux figures 2 à 5, la coupelle 56 comprend deux parois annulaires radiales amont 56a et aval 56b dont les bords annulaires radialement internes 56c, 56d sont reliés à étanchéité à des bords annulaires radialement externes 64c, 64d de deux parois annulaires 64a, 64b amont et aval délimitant axialement un passage de récupération d'huile de l'écope annulaire 64. La paroi 64b est reliée radialement vers l'intérieur à l'arbre 24 de manière à former un épaulement annulaire. Pour réaliser une jonction étanche, les bords radialement externes 64c, 64d des parois annulaires 64a, 64b de l'écope 64 comprennent chacune une gorge annulaire 66 recevant un joint annulaire 68 fendu. Chaque joint annulaire 68 fendu est monté précontraint circonférentiellement dans une gorge annulaire 66 de l'écope 64 de sorte qu'en fonctionnement les joints annulaires 68 soient solidaires des extrémités radialement interne 56c, 56d des parois annulaires radiales 56a, 56b de la coupelle 56 et frotte sur un flanc latéral d'une gorge 66 de l'écope annulaire 64 lorsque l'on est à basse vitesse de rotation et que l'écope est remplie d'huile. Le frottement du joint amont s'opère sur le flanc amont de la gorge amont formée dans la paroi annulaire 64b. Le frottement du joint aval s'opère sur le flanc aval de la gorge aval formée dans la paroi annulaire 64a.

Selon l'invention, la turbomachine comprend des premiers moyens fixes de projection d'huile 70 comprenant une pluralité de gicleurs 72 d'huile répartis autour de l'axe A qui sont reliés à une pompe et un réservoir d'huile (figure 1A). Dans une réalisation de l'invention, les gicleurs d'huile 72 sont des orifices agencés sur un anneau entourant l'arbre 24 du compresseur basse pression 14.

Le diamètre du gicleur 72 doit être supérieur au diamètre maximum des particules susceptibles d'obturer les gicleurs. Le diamètre doit également être suffisamment grand pour assurer un débit d'huile d'alimentation de la coupelle 56 et suffisamment énergétique pour être rectiligne sur une distance d'environ 5 cm. Dans une réalisation pratique de l'invention, les moyens de projection d'huile sont configurés pour avoir une pression de sortie d'environ 1 bar dans les régimes les moins favorables comme le ralenti. Si on souhaite éloigner le gicleur 66 de l'arbre 24, il faut alors augmenter la pression de l'huile.

Ces gicleurs 72 sont orientés de manière à ce que leurs jets d'huile (flèche C sur les figures 1A et 2) projettent de l'huile dans l'espace annulaire entre l'arbre 24 et l'écope annulaire 64 de manière à ce que l'huile soit récupéré par l'écope annulaire 64 et précentrifugée dans l'écope annulaire 64 avant de passer dans la coupelle 56. De cette, manière il est possible de garantir une bonne alimentation en huile du rouet 54 même lorsque la vitesse de rotation de l'arbre 24 est faible et que le débit d'huile est faible. En effet, dans le montage exposé ci-dessus, le pignon central 26 est relié l'arbre 24 de la turbine basse pression et tourne plus vite que le porte-satellites 36 portant la coupelle 56. La projection d'huile sur l'arbre 24 permet une centrifugation initiale de l'huile sur l'arbre 24 et dans l'écope 64 induisant une augmentation de la pression d'huile avant son introduction dans la coupelle 56 du porte-satellites 36 en comparaison de la pression d'huile atteignable si l'huile était projetée directement dans la coupelle 56.

Comme cela est mieux visible sur les figures 2 et suivantes, l'écope 64 comprend une cavité annulaire de réception de l'huile qui est délimitée par deux flancs 64e, 64f annulaires formant respectivement les faces internes des parois annulaires radiales 64a, 64b de l'écope annulaire 64. Ces flancs annulaires 64e, 64f convergent l'un vers l'autre radialement vers l'extérieur en direction d'une paroi annulaire de fond 64g externe qui comprend des orifices 64h de passage d'huile vers la coupelle annulaire 56. Les flancs annulaires 64e, 64f sont inclinés en oblique par rapport à un plan radial séparant les deux flans annulaires 64e, 64f. Les flancs annulaires 64e, 64f peuvent être sensiblement symétriques l'un de l'autre par rapport à ce dit plan radial. Dans toutes les configurations, le flanc amont 64f est tronconique à section augmentant vers l'aval et le flanc aval 64e est tronconique à section augmentant vers l'amont. Le flanc amont 64f se prolonge radialement vers l'intérieur par une surface annulaire sensiblement radiale 64i, de manière à permettre une récupération de l'huile s'écoulant sur l'arbre 24 et son guidage vers le flanc 64f amont de l'écope 64.

Dans une deuxième réalisation de l'écope annulaire 64 représentée en figure 3, les flancs 64e, 64f de l'écope 64 sont reliées par des cloisons axiales 74 espacées circonférentiellement les unes des autres de manière à délimiter des cavités ou cuvettes circonférentielles indépendantes.

Dans une troisième réalisation de l'écope annulaire 64 représentée en figure 4, des couples d'ailettes 76a, 76b sont formées dans la cavité de l'écope 64. Chaque couple d'ailette 76a, 76b comprend une première ailette 76a s'étendant vers l'aval depuis le flanc amont 64f de l'écope annulaire 64 et une seconde ailette 76b s'étendant vers l'amont depuis le flanc aval 64e de l'écope annulaire 64. Les ailettes 76a, 76b s'étendent en vis-à-vis axial l'une de l'autre sans pour autant que les extrémités libres en vis-à-vis axial ne se touchent. L'étendue axiale des ailettes 76a, 76b est limitée de manière à réduire les projections parasites d'huile en dehors de l'écope annulaire 64.

La quatrième réalisation, représentée en figure 5, correspond à une écope 64 intégrant à la fois des ailettes 76a, 76b et des cloisons 74. Ce mode de réalisation permet d'améliorer la tenue mécanique de l'écope tout en limitant les éclaboussures.

On notera que le mode de réalisation de la figure 2 offre une tenue mécanique réduite par rapport aux réalisations des figures 3, 4 et 5 mais ne comprend aucun obstacle à l'arrivée d'huile dans l'écope, à bas régime de fonctionnement, comme cela est le cas dans les réalisations des figures 4 et 5. La réalisation de la figure 3 offre une meilleure tenue mécanique que les autres réalisations ainsi qu'une bonne centrifugation à haut régime mais gène l'écoulement d'huile à haut régime de fonctionnement, pouvant conduire à des éclaboussures d'huile à l'entrée de l'écope.

Dans d'autres réalisations possibles, les ailettes pourraient avoir une forme en U ou en V.

Pour assurer une alimentation en huile optimale de la coupelle annulaire 56, les jets d'huile des gicleurs 72 doivent, de préférence, viser un point d'impact sur l'arbre 24 qui est situé axialement entre les deux parois annulaires 64b, 64a de l'écope, préférentiellement entre la nervure annulaire 78 et la paroi annulaire aval 64a de l'écope 64. La direction d'un jet d'huile d'un gicleur 72 comprend donc une composante axiale non nulle dirigée du gicleur 72 vers l'écope 56 et une composante radiale non nulle dirigée du gicleur 72 vers l'arbre 24.

Dans une réalisation, la direction de chacun des jets des gicleurs 72 peut être entièrement comprise dans un plan contenant l'axe de rotation A de l'arbre 24. La direction des jets d'huile peut, de préférence comprendre une composante tangentielle non nulle dirigée dans un sens de rotation de l'arbre 24 afin de faciliter l'entrainement en rotation de l'huile. L'huile impactant l'arbre 24 a ainsi une vitesse tangentielle non nulle, ce qui permet de réduire la différence de vitesse tangentielle entre l'huile et l'arbre 24, limitant ainsi les éclaboussures.

Comme représenté sur les figures 3, 4 et 5, l'arbre 24 basse pression peut porter une paroi annulaire de déviation 78 de l'huile vers l'écope annulaire 64. Cette paroi annulaire 78 est agencée axialement au droit de l'écope annulaire 64. La face de la paroi de déviation 78 impactée par l'huile pourrait avoir une forme incurvée concave, optimisée pour permettre une bonne redirection de l'huile vers l'écope annulaire 64 tout en limitant les projections parasites d'huile.

Enfin, en référence de nouveau à la figure 1, la turbomachine comprend également des seconds moyens 80 de projection d'huile sur les paliers de roulement amont 44, 46 et le palier aval 40. Ces premiers 70 et seconds 80 moyens de projection d'huile sont intégrés à un même circuit d'huile 82 qui comprend également une pompe 84. Cette pompe 84 alimente simultanément les premiers moyens 70 de projections d'huile alimentant le réducteur épicycloïdal 10 et les seconds moyens d'alimentation des paliers 40, 44, 46.

Ainsi, le montage selon l'invention d'une écope annulaire solidaire de l'arbre permet d'assurer une centrifugation de l'huile à bas régime et il est possible d'avoir une pompe d'alimentation dont la vitesse de fonctionnement n'a pas besoin d'être fonction de la vitesse de rotation de l'arbre 24 entrainant le pignon central. Dans une configuration particulière, la vitesse de fonctionnement de la pompe peut également être choisie pour être dépendante de la vitesse d'un arbre haute pression de la turbomachine tel que l'arbre du compresseur haute pression.

## Revendications

1. Train (10) d'engrenages épicycloïdal comprenant un pignon central (26), une couronne extérieure (28) et des pignons satellites (32) en prise avec le pignon central (26) et avec la couronne extérieure (28) et montés chacun libre en rotation sur un porte-satellites (36), le train (10) comprenant des moyens de lubrification des dentures et des axes (34) des pignons satellites (32), ces moyens comportant une coupelle annulaire (56) solidaire du porte-satellites (36) ouverte radialement vers l'intérieur, **caractérisé en ce qu'**une écope annulaire (64) est agencée radialement à l'intérieur de la coupelle (56) et appliquée annulairement à étanchéité sur celle-ci, l'écope annulaire (64) étant solidaire en rotation du pignon central (26).

2. Train (10) selon la revendication 1, **caractérisé en ce que** l'écope annulaire (64) comprend deux flancs annulaires (64e, 64f) reliés radialement vers l'extérieur par une paroi (64g) radialement externe de fond comportant des orifices (64h) de passage d'huile vers la coupelle (56).

3. Train selon la revendication 2, **caractérisé en ce que** les flancs (64e, 64f) convergent l'un vers l'autre en direction de la paroi de fond (64g).

4. Train (10) selon l'une des revendications 1 à 3, **caractérisé en ce que** la coupelle (56) comprend deux parois annulaires radiales (56a, 56b) dont les extrémités radialement internes (56c, 56d) sont en appui sur des joints annulaires (68) montés dans des gorges annulaires (66) de l'écope annulaire (64).

5. Train selon la revendication 4, **caractérisé en ce que** les joints annulaires (68) sont des joints annulaires fendus montés précontraints circonférentiellement dans les gorges annulaires (66).

6. Train selon l'une des revendications 1 à 5, **caractérisé en ce que** l'écope annulaire (64) comprend une pluralité de cloisons axiales (74) espacées circonférentiellement les unes des autres et délimitant une pluralité de cavités circonférentielles indépendantes.

7. Train selon l'une des revendications 1 à 6, **caractérisé en ce que** l'écope (64) comprend une pluralité de couples d'ailettes (76a, 76b) espacées circonférentiellement, les ailettes (76a, 76b) d'un couple donné s'étendant en vis-à-vis axiale l'une vers l'autre depuis un flanc de l'écope annulaire (64).

8. Turbomachine comprenant un train d'engrenages selon l'une des revendications 1 à 5 dont le pignon central (26) entoure et est solidaire en rotation d'un arbre (24) de la turbomachine, et des premiers moyens fixes de projection d'huile agencés radialement à l'extérieur de l'arbre (24) et comportant au moins un gicleur d'huile (72) projetant de l'huile en direction de l'arbre (24) dans l'espace annulaire entre l'écope annulaire (64) et l'arbre (24).

9. Turbomachine selon la revendication 8, **caractérisée en ce que** l'arbre (24) porte une paroi annulaire (78) de déviation de l'huile formée en saillie radialement vers l'extérieur sur l'arbre (24) et positionnée axialement en vis-à-vis de l'écope annulaire (64), le gicleur d'huile (72) étant orienté de manière à projeter de l'huile en direction de ladite paroi de déviation (78).

10. Turbomachine selon la revendication 8 ou 9, **caractérisée en ce que** le train (10) d'engrenages est monté dans une enceinte annulaire (12) formée radialement à l'intérieur d'un compresseur (14) basse pression, le porte-satellites (36) étant relié à une roue de soufflante (16) amont et l'arbre (24) étant un arbre (24) du compresseur basse pression (14).

11. Turbomachine selon la revendication 10, **caractérisée en ce que** le train (10) d'engrenages est intercalé axialement entre un palier amont (44, 46) et un palier aval (40) portés par une structure statorique (42, 48) du compresseur basse pression (14), le palier amont (44, 46) guidant en rotation un arbre de liaison (38) de la roue de soufflante (16) au porte-satellites (36) et le palier aval (40) guidant en rotation l'arbre (24) du compresseur basse pression (14).

12. Turbomachine selon la revendication 11, **caractérisée en ce que** les premiers moyens fixes de projection d'huile sont intégrés à un circuit d'huile comprenant en outre des seconds moyens de projection d'huile sur le palier amont (44, 46) et le palier aval (40) et une pompe (84) d'alimentation simultanée des premiers (70) et seconds moyens (80) de projection d'huile.

## Patentansprüche

1. Planetengetriebezug (10) mit einem Sonnenrad (26), einem äußeren Hohlrad (28) und Planetenrädern (32), die mit dem Sonnenrad (26) und dem äußeren Hohlrad (28) in Eingriff sind und jeweils auf einem Planetenträger (36) frei drehbar gelagert sind, wobei der Getriebezug (10) Schmiermittel zum Schmieren der Verzahnungen und der Achsen (34) der Planetenräder (32) enthält, wobei diese Mittel eine ringförmige Schale (56) enthalten, die fest mit dem Planetenträger (36) verbunden und radial nach innen offen ist, **dadurch gekennzeichnet, dass** eine ringförmige Schöpfeinrichtung (64) radial innerhalb der Schale (56) angeordnet ist und ringförmig dicht auf dieser aufliegt, wobei die ringförmige Schöpfeinrichtung (64) drehfest mit dem Sonnenrad (26) verbunden ist.

2. Getriebezug (10) nach Anspruch 1, **dadurch gekennzeichnet, dass** die ringförmige Schöpfeinrichtung (64) zwei ringförmige Flanken (64e, 64f) enthält, die radial nach außen über eine radial äußere Bodenwand (64g) verbunden sind, die Öffnungen (64h) für den Durchgang von Öl zur Schale (56) aufweist.

3. Getriebezug nach Anspruch 2, **dadurch gekennzeichnet, dass** die Flanken (64e, 64f) zur Bodenwand (64g) hin zueinander konvergieren.

4. Getriebezug (10) nach einem der Ansprüche 1 bis 3, **dadurch gekennzeichnet, dass** die Schale (56) zwei radiale Ringwände (56a, 56b) aufweist, deren radial innere Enden (56c, 56d) an ringförmigen Dichtungen (68) anliegen, die in Ringnuten (66) der ringförmigen Schöpfeinrichtung (64) gelagert sind.

5. Getriebezug nach Anspruch 4, **dadurch gekennzeichnet, dass** die ringförmigen Dichtungen (68) geteilte Ringdichtungen sind, die in den Ringnuten (66) in Umfangsrichtung vorgespannt sind.

6. Getriebezug nach einem der Ansprüche 1 bis 5, **dadurch gekennzeichnet, dass** die ringförmige Schöpfeinrichtung (64) eine Vielzahl von in Umfangsrichtung beabstandeten axialen Trennwänden (74) umfasst, die eine Vielzahl von unabhängigen Umfangshohlräumen begrenzen.

7. Getriebezug nach einem der Ansprüche 1 bis 6, **dadurch gekennzeichnet, dass** die Schöpfeinrichtung (64) eine Vielzahl von Paaren von in Umfangsrichtung beabstandeten Rippen (76a, 76b) umfasst, wobei sich die Rippen (76a, 76b) eines gegebenen Paares von einer Flanke der ringförmigen Schöpfeinrichtung (64) ausgehend axial gegenüberliegend aufeinander zu erstrecken.

8. Turbomaschine mit einem Getriebezug nach einem der Ansprüche 1 bis 5, dessen Sonnenrad (26) eine Welle (24) der Turbomaschine umgibt und mit dieser drehfest verbunden ist, und mit ersten ortsfesten Ölaufspritzmitteln, die radial außerhalb der Welle (24) angeordnet sind und mindestens eine Öldüse (72) aufweisen, die Öl in Richtung der Welle (24) in den Ringraum zwischen der ringförmigen Schöpfeinrichtung (64) und der Welle (24) spritzt.

9. Turbomaschine nach Anspruch 8, **dadurch gekennzeichnet, dass** die Welle (24) eine ringförmige Ölumlenkwand (78) trägt, die radial nach außen vorspringend an der Welle (24) ausgebildet und axial gegenüber der ringförmigen Schöpfeinrichtung (64) angeordnet ist, wobei die Öldüse (72) so ausgerichtet ist, dass sie Öl in Richtung der Umlenkwand (78) spritzt.

10. Turbomaschine nach Anspruch 8 oder 9, **dadurch gekennzeichnet, dass** der Getriebezug (10) in einem ringförmigen Gehäuse (12) gelagert ist, das radial innerhalb eines Niederdruckverdichters (14) ausgebildet ist, wobei der Planetenträger (36) mit einem stromaufwärtigen Lüfterrad (16) verbunden ist und die Welle (24) eine Welle (24) des Niederdruckverdichters (14) ist.

11. Turbomaschine nach Anspruch 10, **dadurch gekennzeichnet, dass** der Getriebezug (10) axial zwischen einem stromaufwärts gelegenen Lager (44, 46) und einem stromabwärts gelegenen Lager (40) angeordnet ist, die von einer Statorstruktur (42, 48) des Niederdruckverdichters (14) getragen werden, wobei das stromaufwärts gelegene Lager (44, 46) eine Welle (38) drehend führt, die das Lüfterrad (16) mit dem Planetenträger (36) verbindet, und das stromabwärts gelegene Lager (40) die Welle (24) des Niederdruckverdichters (14) drehend führt.

12. Turbomaschine nach Anspruch 11, **dadurch gekennzeichnet, dass** die ersten ortsfesten Ölaufspritzmittel in einen Ölkreislauf integriert sind, der ferner zweite Ölaufspritzmittel zum Aufspritzen von Öl auf das stromaufwärts gelegene Lager (44, 46) und auf das stromabwärts gelegene Lager (40) und eine Pumpe (84) zur gleichzeitigen Versorgung der ersten (70) und zweiten (80) Ölaufspritzmittel umfasst.

## Claims

1. An epicycloidal gear train (10) comprising a central pinion (26), an outer crown (28) and satellite pinions (32) in engagement with the central pinion (26) and the outer crown (28) and each mounted freely rotatable on a satellite carrier (36), the train (10) comprising means for lubricating the teeth and axes (34) of the satellite pinions (32), these means comprising an annular cup (56) integral with the satellite carrier (36) opened radially inwardly, **characterized in that** an annular bailer (64) is arranged radially inside the cup (56) and applied annularly sealingly thereto, the annular bailer (64) being integral with the central pinion (26) in rotation.

2. The gear train (10) according to claim 1, **characterized in that** the annular bailer (64) comprises two annular flanks (64e, 64f) connected radially outwardly by a radially outer bottom wall (64g) having oil passage orifices (64h) to the cup (56).

3. The gear train according to claim 2, **characterized in that** the flanks (64e, 64f) converge towards each other towards the bottom wall (64g).

4. The gear train (10) according to one of claims 1 to 3, **characterized in that** the cup (56) comprises two radial annular walls (56a, 56b) whose radially inner ends (56c, 56d) are supported on annular joints (68) mounted in annular grooves (66) of the annular bailer (64).

5. The gear train according to claim 4, **characterized in that** the annular seals (68) are split annular seals mounted circumferentially prestressed in the annular grooves (66).

6. The gear train according to one of claims 1 to 5, **characterized in that** the annular bailer (64) comprises a plurality of circumferentially spaced axial partitions (74) and delimiting a plurality of independent circumferential cavities.

7. The gear train according to one of claims 1 to 6, **characterized in that** the bailer (64) comprises a plurality of circumferentially spaced fin pairs (76a, 76b), the fins (76a, 76b) of a given torque extending axially opposite each other from a flank of the annular bailer (64).

8. A turbomachine comprising a gear train according to one of claims 1 to 5, the central pinion (26) of which surrounds and is rotationally fixed to a shaft (24) of the turbomachine, and first fixed oil spraying means arranged radially outside the shaft (24) and having at least one oil nozzle (72) projecting oil towards the shaft (24) in the annular space between the annular bailer (64) and the shaft (24).

9. The turbomachine according to claim 8, **characterized in that** the shaft (24) carries an annular oil deflection wall (78) formed radially outwardly on the shaft (24) and positioned axially opposite the annular bailer (64), the oil nozzle (72) being oriented so as to project oil towards said deflection wall (78).

10. The turbomachine according to claim 8 or 9, **characterized in that** the gear train (10) is mounted in an annular chamber (12) formed radially inside a low-pressure compressor (14), the satellite carrier (36) being connected to an upstream fan wheel (16) and the shaft (24) being a shaft (24) of the low-pressure compressor (14).

11. The turbomachine according to claim 10, **characterized in that** the gear train (10) is axially interposed between an upstream bearing (44, 46) and a downstream bearing (40) carried by a stator structure (42, 48) of the low-pressure compressor (14), the upstream bearing (44, 46) rotatably guiding a connecting shaft (38) from the fan wheel (16) to the satellite carrier (36) and the downstream bearing (40) rotatably guiding the shaft (24) of the low-pressure compressor (14).

12. The turbomachine according to claim 11, **characterized in that** the first fixed oil spraying means are integrated into an oil circuit further comprising second oil spraying means on the upstream bearing (44, 46) and the downstream bearing (40) and a pump (84) for simultaneous feeding of the first (70) and second (80) oil spraying means.
